# FASCICULE DE BREVET EUROPEEN

(11) **EP 3 056 750 B1**
(45) Date de publication et mention de la délivrance du brevet: **21.11.2018**
(21) Numéro de dépôt: 16153664.4
(22) Date de dépôt: 01.02.2016
(51) Int. Cl.: F16C 19/06, F16C 35/077, F16C 35/04

(54) **PROCÉDÉ D ASSEMBLAGE D'UNE BRIDE DE FIXATION AUTOUR D'UNE BAGUE EXTÉRIEURE D'UN ROULEMENT**
MONTAGEVERFAHREN EINES BEFESTIGUNGSFLANSCHES UM EINEN AUSSENRING EINES LAGERS
METHOD FOR ASSEMBLING A CLAMP AROUND AN OUTER RING OF A BEARING

(30) Priorité: 11.02.2015 FR 1551130
(43) Date de publication de la demande: 17.08.2016
(73) Titulaire: NTN-SNR Roulements, 74000 Annecy (FR)
(72) Inventeur: MAILLE, Renaud, 74000 Annecy (FR); BONNAUDET, Aurélien, 74000 Annecy (FR)
(74) Mandataire: Sayettat, Julien Christian

(56) Documents cités:
- DE-A1- 10 329 433
- DE-A1-102010 061 914
- DE-U1-202014 105 640
- JP-A- 2013 137 071

## Description

L'invention concerne un procédé d'assemblage d'une bride de fixation autour d'une bague extérieure d'un roulement, un roulement comprenant une bride de fixation assemblée sur sa bague extérieure au moyen d'un tel procédé, ainsi qu'un montage d'un arbre tournant dans un carter au moyen d'un tel roulement.

L'invention s'applique plus particulièrement au montage d'un arbre primaire ou secondaire dans un carter d'une boîte de vitesses de véhicule automobile.

Pour ce faire, on connaît un roulement dont la bague extérieure présente une gorge périphérique formée entre une portée avant présentant un premier diamètre et une portée arrière présentant un deuxième diamètre qui est supérieur audit premier diamètre. En outre, la bride présente un alésage dont le diamètre est compris entre lesdits premier et deuxième diamètres.

Ainsi, par coulissement relatif de l'alésage autour de la portée avant, on peut monter la bride en appui axial sur la portée arrière avec ledit alésage en regard radial de la gorge. Ensuite, l'assemblage peut être réalisé en poinçonnant axialement le bord de l'alésage de sorte à former des bourrelets de matière qui s'étendent radialement dans l'alésage pour être disposés dans la gorge afin d'interférer avec elle.

Toutefois, cet assemblage nécessite un effort axial de poinçonnage qui est important et induit une déformation de la matière qui est difficilement contrôlable. Il en résulte que la géométrie des bourrelets ne peut pas être définie de façon fiable, alors même que le comportement mécanique de l'assemblage en dépend directement.

En particulier, il peut être souhaité que l'assemblage soit réalisé avec un jeu axial et/ou radial défini entre la bride et le roulement, notamment afin de permettre le montage d'un arbre tournant dans un carter d'une boîte de vitesses.

Le document FR-2 978 513 décrit un procédé d'assemblage d'une bride de fixation autour d'une bague extérieure d'un roulement, ladite bague présentant une gorge périphérique formée entre une portée avant présentant un premier diamètre et une portée arrière présentant un deuxième diamètre qui est supérieur audit premier diamètre, ladite bride présentant un alésage dont le diamètre est compris entre lesdits premier et deuxième diamètres, ledit procédé comprenant les étapes suivantes :
- prévoir une bride comprenant des orifices dont le bord intérieur est équipé d'une barrette déformable radialement entre un état de montage dans lequel lesdites barrettes sont inscrites dans le diamètre de l'alésage et un état déformé dans lequel lesdites barrettes délimitent un diamètre inscrit qui est inférieur au premier diamètre ;
- monter la bride autour de la bague par coulissement relatif de l'alésage autour de la portée avant pour mettre les barrettes, en état de montage, en regard radial de la gorge ;
- déformer radialement les barrettes pour les disposer au moins en partie dans la gorge afin d'assurer l'assemblage de ladite bride par interférence entre le premier diamètre et le diamètre inscrit délimité par lesdites barrettes.

En particulier, un tel procédé permet de contrôler de façon simple et peu contraignante l'interférence entre la bride et la bague extérieure, afin de pouvoir fiabiliser l'obtention du comportement mécanique souhaité pour l'assemblage.

L'invention vise à perfectionner l'art antérieur en proposant un procédé d'assemblage qui soit plus simple à mettre en oeuvre.

A cet effet, et selon un premier aspect, l'invention propose un procédé d'assemblage d'une bride de fixation autour d'une bague extérieure d'un roulement, ladite bague présentant une gorge périphérique formée entre une portée avant présentant un premier diamètre et une portée arrière présentant un deuxième diamètre qui est supérieur audit premier diamètre, ladite bride présentant un alésage dont le diamètre est compris entre lesdits premier et deuxième diamètres, ledit procédé comprenant les étapes suivantes :
- prévoir une bride comprenant au moins un ergot de montage indéformable qui est saillant intérieurement du diamètre de l'alésage, ainsi qu'au moins un organe d'assemblage qui est déformable radialement entre un état de montage, dans lequel ledit organe est disposé dans le diamètre de l'alésage, et un état monté, dans lequel ledit organe délimite avec ledit ergot une dimension inscrite qui est inférieure au premier diamètre ;
- disposer au moins un ergot de montage dans la gorge ;
- déformer radialement au moins un organe d'assemblage depuis l'état de montage vers l'état monté pour le disposer au moins en partie dans la gorge afin d'assurer l'assemblage de ladite bride par interférence entre la gorge, l'ergot de montage et l'organe d'assemblage.

Selon un deuxième aspect, l'invention propose un roulement comprenant une bague extérieure, une bague intérieure et des corps roulants disposés entre lesdites bagues pour permettre leur rotation relative, ledit roulement comprenant en outre une bride de fixation qui est assemblée autour de la bague extérieure par mise en oeuvre d'un tel procédé, ladite bague présentant une gorge périphérique formée entre une portée avant présentant un premier diamètre et une portée arrière présentant un deuxième diamètre qui est supérieur audit premier diamètre, ladite bride présentant un alésage dont le diamètre est compris entre lesdits premier et deuxième diamètres, ladite bride comprenant au moins un ergot de montage indéformable qui est saillant intérieurement du diamètre de l'alésage, ainsi qu'au moins un organe d'assemblage qui est disposé au moins en partie dans la gorge, ledit organe délimitant avec ledit ergot une dimension inscrite qui est inférieure au premier diamètre.

Selon un troisième aspect, l'invention propose un montage d'un arbre tournant dans un carter au moyen d'un tel roulement, ledit arbre étant solidarisé à la bague intérieure et la bride étant fixée au carter.

D'autres objets et avantages de l'invention apparaîtront dans la description qui suit, faite en référence aux figures jointes, dans lesquelles :
- la figure 1 est une représentation partielle et en coupe longitudinale d'un montage d'un arbre tournant dans un carter au moyen d'un roulement selon un mode de réalisation de l'invention ;
- la figure 2 représente en perspective une bague extérieure selon un mode de réalisation de l'invention ;
- les figures 3 représentent en perspective une bride de fixation selon un premier mode de réalisation de l'invention ;
- la figure 4 représente en coupe longitudinale un roulement sur la bague extérieure duquel la bride des figures 3 est assemblée ;
- les figures 5 représentent en perspective une bride de fixation selon un deuxième mode de réalisation de l'invention ;
- la figure 6 représente en perspective coupée un roulement sur la bague extérieure duquel la bride des figures 5 est assemblée.

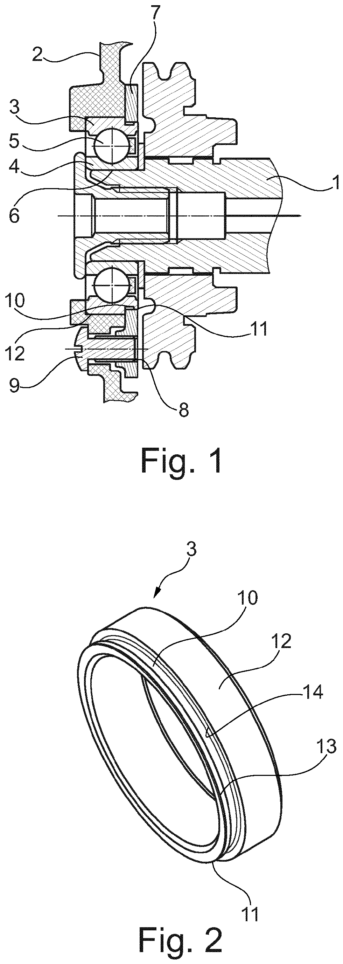

En relation avec la figure 1, on décrit le montage d'un arbre 1 primaire ou secondaire dans un carter 2 d'une boîte de vitesses de véhicule automobile, ledit montage étant réalisé au moyen d'un roulement comprenant une bague extérieure 3, une bague intérieure 4 et des corps roulants 5 disposés entre lesdites bagues pour permettre leur rotation relative.

Dans le mode de réalisation représenté, la bague intérieure 4 est tournante en étant solidarisée autour de l'arbre 1 par emmanchement dans un logement 6 dudit arbre prévu à cet effet, la bague extérieure 3 est fixe et les corps roulants 5 sont sous la forme de billes.

La bague extérieure 3 est équipée d'une bride de fixation 7 qui permet le montage de l'arbre 1 en rotation dans le carter 2. Pour ce faire, la bride 7 est assemblée autour de la bague extérieure 3, ladite bride étant équipée de moyens permettant sa fixation au carter 2, par exemple sous la forme d'un orifice 8 coopérant avec une vis 9 du carter 2.

En relation avec la figure 2, la bague extérieure 3 présente une gorge périphérique 10 formée entre une portée avant 11 présentant un premier diamètre et une portée arrière 12 présentant un deuxième diamètre qui est supérieur audit premier diamètre. En particulier, les portées 11, 12 présentent une surface extérieure annulaire délimitant leur diamètre respectif, la portée avant 11 s'étend jusqu'au bord avant et la portée arrière 12 s'étend jusqu'au bord arrière de la bague extérieure 3.

Par ailleurs, la dimension axiale de la portée arrière 12 est plus importante que celle de la portée avant 11 de sorte à disposer la gorge 10 latéralement vers l'avant de la bague extérieure 3. En outre, la portée arrière 12 est emmanchée dans un logement du carter 2 lors du montage de l'arbre tournant 1 dans ledit carter.

La gorge 10 présente une section en U ou en V dont chaque bord 13, 14 s'étend radialement pour relier le fond de la gorge 10 avec respectivement la portée avant 11 et la portée arrière 12. Ainsi, la dimension radiale du bord 13 de la portée avant 11 est inférieure à celle du bord 14 de la portée arrière 12, la gorge 10 présentant un diamètre de fond qui est inférieur au premier diamètre ainsi qu'une dimension axiale délimitée entre les bords 13, 14.

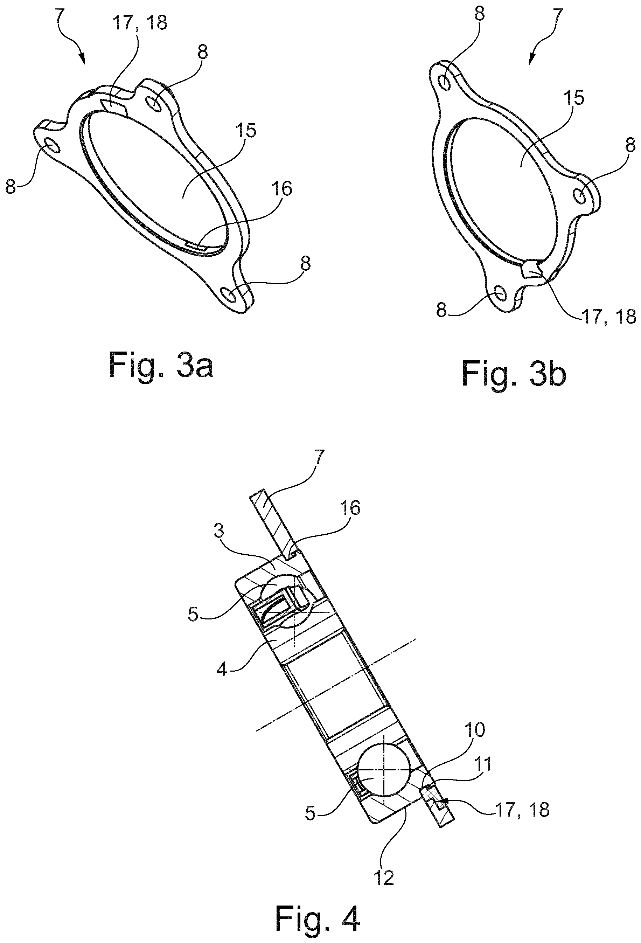

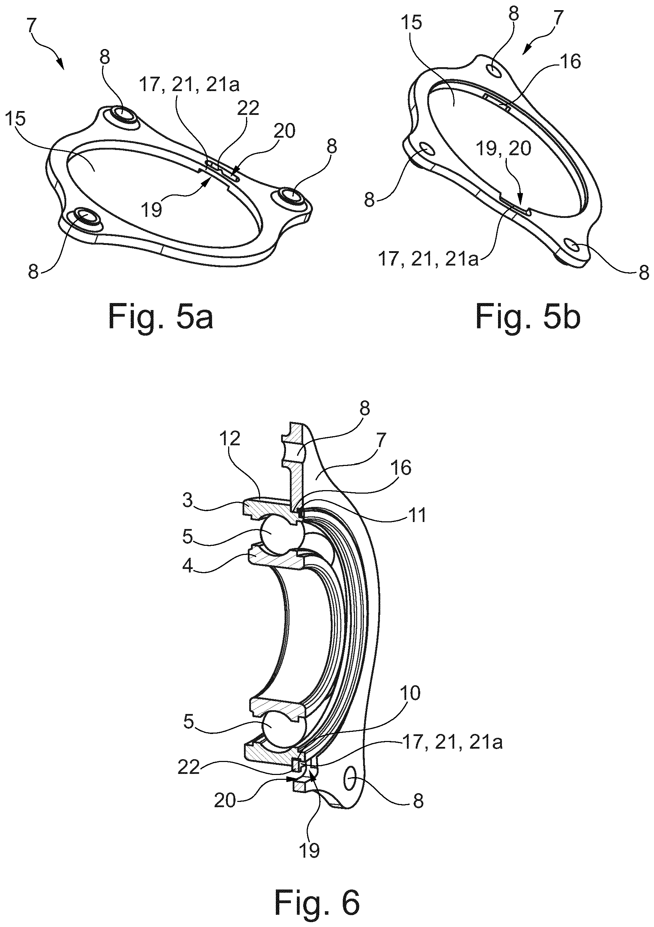

En relation avec les figures 3 et 5, la bride 7 présente une couronne de matière délimitant un alésage 15 dont le diamètre est compris entre les premier et deuxième diamètres. L'épaisseur de la couronne est sensiblement égale à la somme des dimensions axiales de la portée avant 11 et de la gorge 10.

La bride 7 comprend au moins un ergot 16 de montage qui est saillant intérieurement du diamètre de l'alésage 15, ainsi qu'au moins un organe d'assemblage 17 qui est déformable radialement entre un état de montage, dans lequel ledit organe est disposé dans le diamètre de l'alésage 15, et un état monté, dans lequel ledit organe délimite avec ledit ergot une dimension inscrite qui est inférieure au premier diamètre.

En particulier, l'alésage 15 présente deux portions de périmètre disposées en regard, l'ergot de montage 16 et l'organe d'assemblage 17 étant prévus sur respectivement une desdites portions de périmètre. Dans les modes de réalisation représentés, l'alésage 15 est annulaire et les portions s'étendent chacune sur 180°. En variante, par exemple en relation avec une bride 7 fendue, l'alésage 15 peut être ouvert en s'étendant sur moins de 360°.

De façon avantageuse relativement à la simplicité de l'assemblage, l'alésage 15 présente un organe 17 et un ergot 16 qui sont diamétralement opposés. En variante non représentée, deux organes 17 et/ou deux ergots 16 peuvent être prévus, par exemple en étant équirépartis le long dudit alésage.

On décrit ci-dessous un procédé d'assemblage de la bride de fixation 7 autour de la bague extérieure 3 dans lequel au moins un ergot de montage 16 est disposé dans la gorge 10. En particulier, l'ergot de montage 16 est fixe, notamment en étant venu de matière avec la bride 7 de sorte à être indéformable, et présente une dimension radiale saillante du diamètre de l'alésage 15. L'ergot de montage 16 peut être disposé dans la gorge 10 par inclinaison relative de l'alésage 15 par rapport à la portée avant 11, afin de permettre audit ergot, notamment lorsqu'il présente une dimension radiale importante, de passer axialement au-delà de ladite portée avant.

Ensuite, le procédé d'assemblage prévoit de déformer radialement au moins un organe d'assemblage 17 depuis l'état de montage vers l'état monté, pour le disposer au moins en partie dans la gorge 10, afin d'assurer l'assemblage de la bride 7 par interférence entre la gorge 10, l'ergot de montage 16 et l'organe d'assemblage 17. Ainsi, l'assemblage étant réalisé par déformation de l'organe 17, l'effort à appliquer sur la bride 7 reste limité afin de pouvoir bien contrôler l'interférence d'assemblage entre ladite bride et la bague extérieure 3.

En relation avec les figures 3 et 4, l'organe d'assemblage 17 comprend un insert 18 en matériau élastiquement déformable qui est rapporté et fixé, notamment par surmoulage, dans une cavité 19 formée sur l'alésage 15 de la bride 7. En variante, l'organe d'assemblage 17 peut être rapporté sur la bride 7, notamment par clipsage dans la cavité 19, par exemple en étant sous la forme d'une pièce plastique ou de nuance métallique ou de forme ressort.

En particulier, l'organe d'assemblage 17 présente un état monté au repos dans lequel il délimite avec l'ergot de montage 16 une dimension inscrite qui est inférieure au premier diamètre.

Par ailleurs, lors de sa disposition dans la gorge 10, l'organe d'assemblage 17 est contraint élastiquement en état de montage par appui sur la portée avant 11, afin d'être disposé dans le diamètre de l'alésage 15 qui est supérieur au premier diamètre, et donc de passer axialement au-delà de ladite portée avant.

Ainsi, à la fin de son appui sur la portée avant, l'organe d'assemblage 17 est, par rappel élastique, déformé radialement vers son état au repos, afin d'être disposé au moins en partie dans la gorge 10 et d'assurer l'assemblage de la bride 7 par interférence avec ladite gorge, l'ergot de montage 16 et ledit organe.

En relation avec les figures 5 et 6, la bride 7 comprend une cavité 19 dans laquelle est réalisé un orifice 20, l'organe d'assemblage 17 comprenant une barrette 21 qui est formée sur le bord intérieur dudit orifice, notamment en étant venue de matière avec la bride 7.

Dans ce mode de réalisation, la barrette 21 est initialement formée en état de montage, notamment avant l'assemblage de la bride 7 sur la bague extérieure 3. Ainsi, lors de l'assemblage de la bride 7 sur la bague extérieure 3, la barrette 21 est disposée dans la gorge 10 directement en état de montage, puis déformée radialement vers l'état monté, afin d'assurer ledit assemblage par interférence avec ladite gorge, l'ergot de montage 16 et ladite barrette.

La déformation radiale de la barrette 21 peut être réalisée par disposition du doigt d'un outil dans l'orifice 20, puis déplacement, axial ou radial ou combinaison des deux, dudit doigt dans ledit orifice, ledit doigt présentant au moins une face d'appui radial sur la barrette 21 qui est agencée pour pousser ladite barrette à l'intérieur de l'alésage 15 lors dudit déplacement.

De façon avantageuse, la barrette 21 présente un bossage 22 qui s'étend dans l'orifice 20, le doigt prenant appui sur ledit bossage pour déformer radialement ladite barrette.

Le doigt peut notamment présenter une dimension radiale qui est croissante en fonction de la course de déplacement dudit doigt dans l'orifice 20. Ainsi, en contrôlant la course de déplacement du doigt, on peut facilement déterminer la déformation induite pour la barrette 21 et donc l'interférence d'assemblage entre la bride 7 et la bague extérieure 3.

De façon avantageuse, la bride 7 est assemblée avec un jeu radial en prévoyant que l'organe 17 en état monté délimite avec l'ergot 16 un diamètre inscrit qui est supérieur au diamètre de fond de la gorge 10. En particulier, la barrette 21 peut être déformée radialement de sorte que le diamètre inscrit qu'elle délimite soit supérieur au diamètre de fond de la gorge 10. Un jeu radial de l'ordre de 0,25 mm peut être nécessaire pour monter l'ensemble arbre 1 - roulement dans le carter 2 en vue de la fixation de la bride 7.

De même, la bride 7 est assemblée avec un jeu axial en prévoyant que la gorge 10 présente une dimension axiale supérieure à celle de l'organe 17 et de l'ergot 16. En relation avec les figures 5, 6, l'orifice 20 est réalisé dans une cavité arrière 19 de la bride 7 qui permet de réduire localement l'épaisseur de ladite bride au niveau de la barrette 21.

Sur les figures 5, 6, la barrette 21 forme un pont de matière 21a associé de part et d'autre à la bride 7, ledit pont de matière délimitant intérieurement le bord intérieur de l'orifice 20 et extérieurement l'alésage 15, la déformation comprenant le repoussage d'une partie centrale dudit pont à l'intérieur de l'alésage 15 (figure 6).

## Revendications

1. Procédé d'assemblage d'une bride (7) de fixation autour d'une bague extérieure (3) d'un roulement, ladite bague présentant une gorge périphérique (10) formée entre une portée avant (11) présentant un premier diamètre et une portée arrière (12) présentant un deuxième diamètre qui est supérieur audit premier diamètre, ladite bride présentant un alésage (15) dont le diamètre est compris entre lesdits premier et deuxième diamètres, ledit procédé étant **caractérisé en ce qu'**il comprend les étapes suivantes :
- prévoir une bride (7) comprenant au moins un ergot (16) de montage indéformable qui est saillant intérieurement du diamètre de l'alésage (15), ainsi qu'au moins un organe (17) d'assemblage qui est déformable radialement entre un état de montage, dans lequel ledit organe est disposé dans le diamètre de l'alésage (15), et un état monté, dans lequel ledit organe délimite avec ledit ergot une dimension inscrite qui est inférieure au premier diamètre ;
- disposer au moins un ergot (16) de montage dans la gorge (10) ;
- déformer radialement au moins un organe (17) d'assemblage depuis l'état de montage vers l'état monté pour le disposer au moins en partie dans la gorge (10) afin d'assurer l'assemblage de ladite bride par interférence entre la gorge (10), l'ergot (16) de montage et l'organe (17) d'assemblage.

2. Procédé d'assemblage selon la revendication 1, **caractérisé en ce qu'**au moins un ergot (16) de montage est disposé dans la gorge (10) par inclinaison relative de l'alésage (15) par rapport à la portée avant (11).

3. Procédé d'assemblage selon la revendication 1 ou 2, **caractérisé en ce que** l'alésage (15) présente deux portions de périmètre qui sont disposées en regard, au moins un ergot (16) de montage et au moins un organe (17) d'assemblage étant prévus sur respectivement une desdites portions de périmètre.

4. Procédé d'assemblage selon l'une quelconque des revendications 1 à 3, **caractérisé en ce qu'**au moins un organe (17) d'assemblage est réalisé en un matériau élastiquement déformable, ledit organe d'assemblage étant contraint élastiquement en état de montage par appui sur la portée avant (11) lors de sa disposition dans la gorge (10), puis déformé radialement vers l'état monté par rappel élastique à la fin dudit appui.

5. Procédé d'assemblage selon l'une quelconque des revendications 1 à 3, **caractérisé en ce qu'**au moins un organe d'assemblage (17) comprend une barrette (21) qui est formée sur le bord intérieur d'un orifice (20) de la bride (7), ladite barrette étant disposée dans la gorge (10) en état de montage, puis déformée radialement vers l'état monté.

6. Procédé d'assemblage selon la revendication 5, **caractérisé en ce que** la déformation radiale de la barrette (21) est réalisée par disposition du doigt d'un outil dans l'orifice (20), puis déplacement dudit doigt dans ledit orifice, ledit doigt présentant au moins une face d'appui radial sur la barrette (21) qui est agencée pour pousser ladite barrette à l'intérieur de l'alésage (15) lors dudit déplacement.

7. Procédé d'assemblage selon la revendication 6, **caractérisé en ce que** la barrette (21) présente au moins un bossage (22) qui s'étend dans l'orifice (20), le doigt prenant appui sur ledit bossage pour déformer radialement ladite barrette.

8. Procédé d'assemblage selon l'une quelconque des revendications 5 à 7, **caractérisé en ce que** la barrette (21) forme un pont de matière (21a) associé de part et d'autre à la bride (7), ledit pont de matière délimitant intérieurement le bord intérieur de l'orifice (20) et extérieurement l'alésage (15), la déformation comprenant le repoussage d'une partie centrale dudit pont à l'intérieur de l'alésage (15).

9. Procédé d'assemblage selon l'une quelconque des revendications 1 à 8, **caractérisé en ce que** la gorge (10) présente une dimension axiale qui est supérieure à la dimension axiale d'au moins un organe (17) et d'au moins un ergot (16) afin d'assembler la bride (7) avec un jeu axial.

10. Procédé d'assemblage selon l'une quelconque des revendications 1 à 9, **caractérisé en ce que** la gorge (10) présente un diamètre de fond, au moins un organe (17) en état monté délimitant avec au moins un ergot (16) un diamètre inscrit qui est supérieur audit diamètre de fond afin d'assembler la bride (7) avec un jeu radial.

11. Roulement comprenant une bague extérieure (3), une bague intérieure (4) et des corps roulants (5) disposés entre lesdites bagues pour permettre leur rotation relative, ledit roulement comprenant en outre une bride (7) de fixation qui est assemblée autour de la bague extérieure (3) par mise en oeuvre d'un procédé selon l'une quelconque des revendications 1 à 10, ladite bague présentant une gorge périphérique (10) formée entre une portée avant (11) présentant un premier diamètre et une portée arrière (12) présentant un deuxième diamètre qui est supérieur audit premier diamètre, ladite bride présentant un alésage (15) dont le diamètre est compris entre lesdits premier et deuxième diamètres, ladite bride comprenant au moins un ergot (16) de montage indéformable qui est saillant intérieurement du diamètre de l'alésage (15), ainsi qu'au moins un organe (17) d'assemblage qui est disposé au moins en partie dans la gorge (10), ledit organe délimitant avec ledit ergot une dimension inscrite qui est inférieure au premier diamètre.

12. Roulement selon la revendication 11, **caractérisé en ce que** l'alésage (15) de la bride (7) comprend au moins une cavité (19) dans laquelle est formé un organe (17) d'assemblage.

13. Roulement selon la revendication 12, **caractérisé en ce que** l'organe (17) d'assemblage comprend un insert (18) en matériau élastiquement déformable qui est fixé dans la cavité (19).

14. Roulement selon la revendication 12, **caractérisé en ce que** la cavité (19) présente un orifice (20) sur le bord intérieur duquel une barrette (21) d'assemblage est formée.

15. Montage d'un arbre tournant (1) dans un carter (2) au moyen d'un roulement selon l'une quelconque des revendications 11 à 14, ledit arbre étant solidarisé à la bague intérieure (4) et la bride (7) étant fixée au carter (2).

## Patentansprüche

1. Verfahren zum Zusammenfügen eines Befestigungsflanschs (7) um einen Außenring (3) eines Kugellagers, wobei der Ring eine umfängliche Nut (10) aufweist, die zwischen einer vorderen Auflage (11), die einen ersten Durchmesser aufweist, und einer hinteren Auflage (12), die einen zweiten Durchmesser aufweist, der größer ist als der erste Durchmesser, gebildet ist, wobei der Flansch eine Bohrung (15) aufweist, deren Durchmesser zwischen dem ersten und dem zweiten Durchmesser liegt, wobei das Verfahren **dadurch gekennzeichnet ist, dass** es die folgenden Schritte umfasst:
- Vorsehen eines Flanschs (7), der mindestens einen nicht verformbaren Montagedorn (16) umfasst, der innerhalb des Durchmessers der Bohrung (15) vorsteht, sowie mindestens eines Zusammenfügeelements (17), das radial zwischen einem Montagezustand, in dem das Element in dem Durchmesser der Bohrung (15) angeordnet ist, und einem montierten Zustand, in dem das Element mit dem Dorn ein eingetragenes Maß abgrenzt, das kleiner ist als der erste Durchmesser, verformbar ist;
- Anordnen mindestens eines Montagedorns (16) in der Nut (10) ;
- radiales Verformen mindestens eines Zusammenfügeelements (17) ausgehend von dem Montagezustand zu dem montierten Zustand, um mindestens einen Teil in der Nut (10) anzuordnen, um das Zusammenfügen des Flanschs durch Interferenz zwischen der Nut (10), dem Montagedorn (16) und dem Zusammenfügeelement (17) sicherzustellen.

2. Zusammenfügeverfahren nach Anspruch 1, **dadurch gekennzeichnet, dass** mindestens ein Montagedorn (16) in der Nut (10) durch relative Neigung der Bohrung (15) bezüglich der vorderen Auflage (11) angeordnet ist.

3. Zusammenfügeverfahren nach Anspruch 1 oder 2, **dadurch gekennzeichnet, dass** die Bohrung (15) zwei Umkreisabschnitte aufweist, die gegenüberliegend angeordnet sind, wobei mindestens ein Montagedorn (16) und mindestens ein Zusammenfügeelement (17) auf jeweils einem der Umkreisabschnitte vorgesehen sind.

4. Zusammenfügeverfahren nach einem der Ansprüche 1 bis 3, **dadurch gekennzeichnet, dass** mindestens ein Zusammenfügeelement (17) aus einem elastisch verformbaren Material hergestellt ist, wobei das Zusammenfügeelement elastisch im Montagezustand durch Drücken auf die vordere Auflage (11) bei seinem Anordnen in der Nut (10) gespannt wird, dann radial zu dem montierten Zustand durch elastisches Rückstellen an dem Ende des Drucks verformt wird.

5. Zusammenfügeverfahren nach einem der Ansprüche 1 bis 3, **dadurch gekennzeichnet, dass** mindestens ein Zusammenfügeelement (17) eine Leiste (21) umfasst, die auf dem unteren Rand einer Öffnung (20) des Flanschs (7) gebildet ist, wobei die Leiste in der Nut (10) im Montagezustand angeordnet ist, dann radial zu dem montierten Zustand verformt wird.

6. Zusammenfügeverfahren nach Anspruch 5, **dadurch gekennzeichnet, dass** die radiale Verformung der Leiste (21) durch Anordnen eines Fingers eines Werkzeugs in der Öffnung (20), dann Verlagern des Fingers in der Öffnung, wobei der Finger mindestens eine radiale Auflagefläche auf der Leiste (21) aufweist, die eingerichtet ist, um die Leiste in dem Inneren der Bohrung (15) bei der Verlagerung zu schieben, hergestellt wird.

7. Zusammenfügeverfahren nach Anspruch 6, **dadurch gekennzeichnet, dass** die Leiste (21) mindestens einen Höcker (22) aufweist, der sich in die Öffnung (20) erstreckt, wobei der Finger auf dem Höcker aufliegt, um die Leiste radial zu verformen.

8. Zusammenfügeverfahren nach einem der Ansprüche 5 bis 7, **dadurch gekennzeichnet, dass** die Leiste (21) eine Materialbrücke (21a) bildet, die auf beiden Seiten mit dem Flansch (7) verbunden ist, wobei die Materialbrücke den inneren Rand der Öffnung (20) und außen die Bohrung (15) abgrenzt, wobei die Verformung das Treiben eines zentralen Teils der Brücke im Inneren der Bohrung (15) umfasst.

9. Zusammenfügeverfahren nach einem der Ansprüche 1 bis 8, **dadurch gekennzeichnet, dass** die Nut (10) ein axiales Maß aufweist, das größer ist als das axiale Maß mindestens eines Elements (17) und mindestens einen Dorn (16), um den Flansch (7) mit einem axialen Spiel zusammenzubauen.

10. Zusammenfügeverfahren nach einem der Ansprüche 1 bis 9, **dadurch gekennzeichnet, dass** die Nut (10) einen Bodendurchmesser aufweist, wobei mindestens ein Element (17) im montierten Zustand mit mindestens einem Dorn (16) einen eingetragenen Durchmesser abgrenzt, der größer ist als der Bodendurchmesser, um den Flansch (7) mit einem radialen Spiel zusammenzubauen.

11. Kugellager, das einen Außenring (3), einen Innenring (4) und rollende Körper (5) umfasst, die zwischen den Ringen angeordnet sind, um ihre relative Drehung zu erlauben, wobei das Lager außerdem einen Befestigungsflansch (7) umfasst, der um den Außenring (3)durch Umsetzen eines Verfahrens nach einem der Ansprüche 1 bis 10 angebaut wird, wobei der Ring eine umfängliche Hohlkehle (10) umfasst, die zwischen einer vorderen Auflage (11), die einen ersten Durchmesser aufweist, und einer hinteren Auflage (12), die einen zweiten Durchmesser aufweist, der größer ist als der erste Durchmesser, gebildet ist, wobei der Flansch eine Bohrung (15) aufweist, deren Durchmesser zwischen dem ersten und zweiten Durchmesser liegt, wobei der Flansch mindestens einen nicht verformbaren Montagedorn (16) umfasst, der innerhalb des Durchmessers der Bohrung (15) vorsteht, sowie mindestens ein Zusammenfügeelement (17), das mindestens zum Teil in der Nut (10) angeordnet ist, wobei das Element mit dem Dorn ein eingetragenes Maß abgrenzt, das kleiner ist als der erste Durchmesser.

12. Kugellager nach Anspruch 11, **dadurch gekennzeichnet, dass** die Bohrung (15) des Flanschs (7) mindestens einen Hohlraum (19) umfasst, in dem ein Zusammenfügeelement (17) gebildet ist.

13. Kugellager nach Anspruch 12, **dadurch gekennzeichnet, dass** das Zusammenfügeelement (17) einen Einsatz (18) aus elastisch verformbaren Material umfasst, der in dem Hohlraum (19) befestigt ist.

14. Kugellager nach Anspruch 12, **dadurch gekennzeichnet, dass** der Hohlraum (19) eine Öffnung (20) aufweist, auf deren Innenrand eine Zusammenfügeleiste (21) gebildet ist.

15. Montage einer Welle (1), die in einem Gehäuse (2) mittels eines Kugellagers nach einem der Ansprüche 11 bis 14 dreht, wobei die Welle fest mit dem Innenring (4) verbunden ist, und der Flansch (7) an dem Gehäuse (2) befestigt ist.

## Claims

1. Method for assembling a clamp (7) around an outer ring (3) of a bearing, said ring having a peripheral groove (10) formed between a front bearing surface (11) having a first diameter and a rear bearing surface (12) having a second diameter that is greater than said first diameter, said clamp having a bore (15) of which the diameter is between said first and second diameters, said method being **characterised in that** it comprises the following steps:
- providing a clamp (7) comprising at least one mounting tab (16) non-deformable that is protruding interiorly from the diameter of the bore (15), as well as at least one assembly member (17) that is radially deformable between a mounting state, wherein said member is arranged in the diameter of the bore (15), and a mounted state, wherein said member delimits with said tab an inscribed dimension that is less than the first diameter;
- arranging at least one mounting tab (16) in the groove (10);
- radially deforming at least one assembly member (17) from the mounting state to the mounted state in order to arrange it at least partially in the groove (10) in order to provide for the assembly of said clamp by interference between the groove (10), the mounting tab (16) and the assembly member (17).

2. Method for assembling according to claim 1, **characterised in that** at least one mounting tab (16) is arranged in the groove (10) by relative inclination of the bore (15) with respect to the front bearing surface (11).

3. Method for assembling according to claim 1 or 2, **characterised in that** the bore (15) has two portions of perimeter which are arranged opposite, at least one mounting tab (16) and at least one assembly member (17) being provided on respectively one of said portions of perimeter.

4. Method for assembling according to any of claims 1 to 3, **characterised in that** the assembly member (17) is made from an elastically deformable material, said assembly member being elastically constrained in a mounting state by bearing on the front bearing surface (11) during its arrangement in the groove (10), then deformed radially towards the mounted state by elastic return at the end of said bearing.

5. Method for assembling according to any of claims 1 to 3, **characterised in that** the mounting member (17) comprises a bar (21) which is formed on the inner edge of an orifice (20) of the clamp (7), said bar being arranged in the groove (10) in a mounting state, then radially deformed to the mounted state.

6. Method for assembling according to claim 5, **characterised in that** the radial deformation of the bar (21) is carried out by arranging the finger of a tool in the orifice (20), then displacement of said finger in said orifice, said finger having at least one radial bearing face on the bar (21) which is arranged to push said bar inside the bore (15) during said displacement.

7. Method for assembling according to claim 6, **characterised in that** the bar (21) has at least one boss (22) that extends in the orifice (20), with the finger bearing on said boss in order to radially deform said bar.

8. Method for assembling according to any of claims 5 to 7, **characterised in that** the bar (21) forms a bridge of material (21a) associated on either side to the clamp (7), said bridge of material delimiting interiorly the inner edge of the orifice (20) and exteriorly the bore (15), the deformation comprising the pushing back of a central portion of said bridge inside the bore (15).

9. Method for assembling according to any of claims 1 to 8, **characterised in that** the groove (10) has an axial dimension which is greater than the axial dimension of at least one member (17) and at least one tab (16) in order to assemble the clamp (7) with an axial clearance.

10. Method for assembling according to any of claims 1 to 9, **characterised in that** the groove (10) has a bottom diameter, at least one member (17) in mounted state delimiting with at least one tab (16) an inscribed diameter that is greater than said bottom diameter in order to assemble the clamp (7) with a radial clearance.

11. Bearing comprising an outer ring (3), an inner ring (4) and rolling bodies (5) arranged between said rings in order to allow for their relative rotation, said bearing further comprising a clamp (7) which is assembled around the outer ring (3) by implementing a method according to any of claims 1 to 10, said ring having a peripheral groove (10) formed between a front bearing surface (11) having a first diameter and a rear bearing surface (12) having a second diameter that is greater than said first diameter, said clamp having a bore (15) of which the diameter is between said first and second diameters, said clamp comprising at least one mounting tab (16) non-deformable that is protruding interiorly from the diameter of the bore (15), as well as at least one assembly member (17) that is arranged at least partially in the groove (10), said member delimiting with said tab an inscribed dimension that is less than the first diameter.

12. Bearing according to claim 11, **characterised in that** the bore (15) of the clamp (7) comprises at least a cavity (19) wherein is formed an assembly member (17).

13. Bearing according to claim 12, **characterised in that** the assembly member (17) comprises an insert (18) made of an elastically deformable material that is fixed in the cavity (19).

14. Bearing according to claim 12, **characterised in that** the cavity (19) has an orifice (20) on the inner edge of which an assembly bar (21) is formed.

15. Mounting of a rotating shaft (1) in a casing (2) by means of a bearing according to any of claims 11 to 14, said shaft being coupled with the inner ring (4) and the clamp (7) being fixed to the casing (2).
